# EUROPEAN PATENT SPECIFICATION

(11) **EP 2 897 116 B1**
(45) Date of publication and mention of the grant of the patent: **14.09.2016**
(21) Application number: 14170209.2
(22) Date of filing: 28.05.2014
(51) Int. Cl.: G08G 1/056, G08G 1/052, G08G 1/07, G08G 1/04

(54) **System for detecting a vehicle running in a wrong way**
System zur Erfassung eines Fahrzeugfahr in einer falschen Richtung
Système de détection d'un véhicule en marche à contresens

(30) Priority: 10.01.2014 CH 242014
(43) Date of publication of application: 22.07.2015
(73) Proprietor: S-WIT Electronic Engineering SA, 6830 Chiasso (CH)
(72) Inventor: Negri, Fabrizio, 6850 Mendrisio (CH); Villa, Enrico, 22070 Albiolo (CO) (IT)
(74) Representative: Zardi, Marco

(56) References cited:
- EP-A1- 0 919 815
- EP-A2- 0 413 576

## Description

### Field of application

The present invention relates to a system for detecting a vehicle travelling in the wrong direction.

In particular, the invention relates to a system of the aforementioned type designed to emit an alarm for the driver of the vehicle travelling in the wrong direction and another alarm for the drivers of vehicles who are travelling in the right direction.

### Prior art

Systems for detecting a vehicle travelling in the wrong direction are known. For example, these systems are installed at motorway exits or at the exits of one-way provincial or state roads and have the function of preventing a driver from inadvertently turning into and continuing to travel along the road in the wrong direction.

The detection is performed by means of an electronic device, which is installed on the roadside and is designed to detect the direction of travel of the vehicle and to emit an acoustic and/or luminous signal in the case where a vehicle travelling in the wrong direction is detected. The electronic device is for example a radar which emits electromagnetic waves (radio waves or microwaves) in the space where motor cars, motorcycles, lorries and other vehicles travel along the road and detects the position and speed with which said vehicles move depending on the time which lapses between the transmission of the wave and its reception as a wave reflected by the moving vehicles.

The known detection systems suffer from a number of drawbacks, which are mainly associated with the detection accuracy and the difficulty of installation.

In particular, if the detection system performs an incorrect detection of the moving vehicle, for example caused by interference between vehicles or the presence of animals along the roadway, it may emit an alarm even when there is no vehicle travelling in the wrong direction. The generation of false alarms may itself be the cause of danger for the drivers or may result in the unnecessary mobilization of the personnel responsible for monitoring the road traffic or restoring the detection system.

Moreover, the known systems are somewhat costly and complicated to install because they require an electrical connection wired to a power supply unit, needed both for operation of the radar and for operation of the acoustic or luminous alarm, and this connection is not always available at motorway or road exits. Costly and complicated work is therefore required along the roadway before the detection system can be used.

EP 0 413 576 discloses a known system comprising a Doppler radar adapted to detect a speed of a vehicle and alarm means adapted to emit an alarm when the speed of the vehicle exceeds a predefined threshold.

The technical problem forming the basis of the present invention is that of devising a detection system which is substantially free from incorrect detection operations, for example caused by objects or animals interfering with the vehicles to be detected, and which is also simple and inexpensive to install, overcoming the limitations and the drawbacks which hitherto affect the systems according to the prior art.

### Summary of the invention

The idea forming the basis of the present invention is that of devising a system for detecting a vehicle travelling in the wrong direction, wherein the electronic device designed to perform detection of the vehicle carries out a plurality of detection operations and emits an alarm only if, from among the plurality of detection operations performed, at least one predefined number of recordings exceeds a predefined threshold value indicating the presence of a vehicle travelling in the wrong direction.

According to this proposed solution, the detection system, even when it detects a value which exceeds a threshold value, does not emit an alarm, but carries out one or more successive operations in order to check that the alarm is valid and not generated by mistake, randomly or due to interference, for example owing to the presence of an animal along the roadway. In particular it is envisaged that the system detects different types of events in sequence or in parallel and that it triggers the alarm only if a predetermined number of said events or a predetermined sequence during the occurrence of said events is reproduced.

In one embodiment, one of said events is the detection of a speed of travel in the wrong direction above a predefined speed.

According to the above idea, the aforementioned technical problem is solved by a system for detecting a vehicle travelling in the wrong direction having the features recited in claim 1.

Advantageously, if the speed detected is greater than the threshold value, the detection system does not emit immediately the alarm, but performs other detection operations, and the alarm is activated only if the subsequent detection operations confirm that the speeds detected by the vehicle are above the threshold value.

According to one aspect of the invention, the radar is incorporated in a frame which incorporates the alarm, and the alarm comprises a luminous signal suitable for being viewed by the driver of the vehicle travelling in the wrong direction.

Advantageously the alarm warns only the driver of the vehicle travelling and reverse, without the drivers of the vehicles travelling in the right direction being disturbed by the alarm. In particular, it is envisaged that the radar is positioned along a section of the road which allows a driver to turn around easily or reverse easily, namely before the vehicle becomes really dangerous and causes a collision.

The alarm comprises an acoustic alarm and/or means for radio communication with a central control unit. These radio communication means comprise a GPRS/GPS module.

Advantageously the sound alarm, or acoustic alarm, and the radio communication means are incorporated in the frame structure. According to this aspect of the invention, the detection system may be easily installed along the roadside, does not require complicated digging work in the road surface and is immediately ready for use. In this connection, the radio communication means are designed to receive the configuration of the radar and the alarm remotely, for example the threshold speed values or the radius of action of the radar or the number of detection operations above the threshold value beyond which the alarm is activated.

According to another aspect of the present invention, the detection system comprises a second Doppler radar, situated at a predefined distance from the (first) Doppler radar and designed to detect a speed of displacement of the vehicle in a second predetermined area of travel along the road, situated after the first predetermined area in the wrong direction of travel. The second radar is configured to carry out a plurality (n) of operations for detecting the vehicle in the second predetermined area and for emitting a second alarm if the speeds (Vi) detected during the plurality (n) of detection operations exceed a predefined speed (V) a predefined number of times (m, where m ≤n) also in the second predetermined area.

The functional and structural features of the second radar are similar to those of the first radar, for example also the second radar can be easily installed along the roadside, does not require digging work in the road surface, is immediately ready for use, and is equipped with radio communication means for remote configuration of the radar and alarm.

The second radar is also incorporated in a frame comprising the second alarm. The second alarm comprises a luminous signal suitable for being viewed by the drivers of vehicles travelling in the right direction.

Advantageously, the drivers travelling in the right direction are alerted only if the vehicle travelling the wrong way continues to travel in the wrong direction. In particular, the second radar starts to function only if the first radar has emitted the alarm and the driver travelling the wrong way has not stopped his vehicle.

In both the radars, the predefined speed V and/or the predefined number of times m following which the alarm is emitted and/or the radius of the first and second predetermined areas may be modified. These settings may be advantageously sent from a remote control station to the radars, via GPRS or GPS.

Further characteristic features and advantages of the detection system according to the present invention will become clear from an example of embodiment thereof provided hereinbelow with reference to a number of drawings, solely by way of a non-limiting example.

### Brief description of the drawings

Figure 1 shows in diagrammatic form a road section along which the system according to the present invention is installed.
Figure 2 shows in diagrammatic form the connections of the system according to Figure 1.

### Detailed description

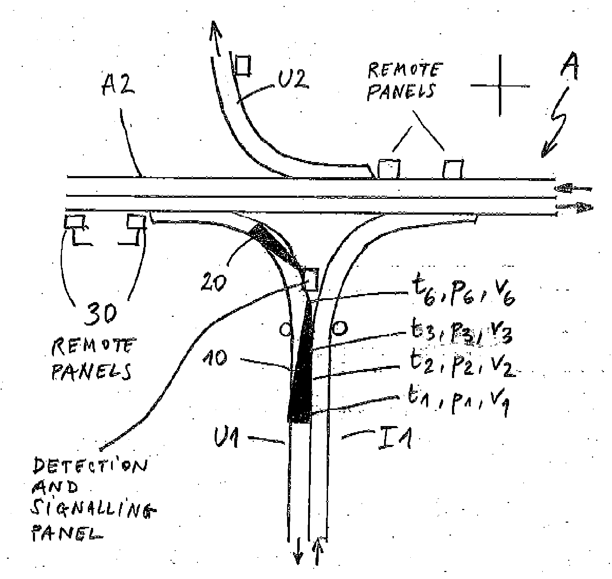

With reference to Figure 1 a road A for travel in both directions is schematically represented, comprising a lane A1 and a lane A2 for travel in the opposite direction to the lane A1, The lane A1 has a one way exit U1 and an entry lane I1 which is again one-way. Likewise the lane A2 has an exit U2.

According to the detection system of the present invention, a first radar 1 is installed in a first area 10 of the exit U1 and is intended to identify certain movement characteristics of the vehicles travelling along the exit in the wrong direction, namely in the opposite direction to the arrows shown in Figure 1, along the exit road U1.

The radar 1 is set to perform n detection operations in the area 10. Each detection operation is associated with a reference time ti and a speed value Vi and/or a position Pi of the vehicle at the time ti.

With reference to Figure 1, at the time t1, the vehicle is located in the position p1 at the speed v1 and, at the time t2, it is located in the position p2 at the speed v2. Depending on the positions p1 and p2, the system detects whether the vehicle is travelling in the wrong direction and, depending on the speed v1 v2, whether the vehicle is slowing down or accelerating.

According to the present invention, even in the case where the object detected is travelling in the opposite direction to the correct direction of travel, it is envisaged that the system does not activate immediately the alarm. In particular, before emitting the alarm, the radar 1 performs further detection operations

Still with reference to the figure, the system detects that, at the time t3, the vehicle is in the position p3 at the speed v3 and, at the time tn, is in the position pn at the speed vn.

In the case where, for a certain number of successive detection operations, the vehicle is still travelling in the wrong direction and, in particular, in a position situated increasingly further along the road and hence more dangerous, it is envisaged that the system emits a visual and/or an acoustic alarm which may be heard or seen, if certain conditions exist.

More particularly, the system emits the alarm if the speed Vi detected in the various time instants is greater than a predefined speed value V at least a predefined number m of times.

In Figure 1, the number n of detection operations performed in the predetermined area 10 is equal to six (6), corresponding to six different positions pi of the vehicle and to six speeds vi.

The predetermined number m of speed recordings vi beyond the threshold value V, beyond which the alarm is emitted, could be set to two (2) and the threshold speed could be set to 15 km/h.

In this case, if on four or more than four occasions the speed vi detected in the positions pi inside the predetermined area 10 is greater than or equal to 15 km/h, the system emits an alarm; for example if v1=16 Km/h; v2=17 Km/h; v3=16 Km/h; v4=14 Km/h; v5=15 Km/h; v6=16 Km/h, the alarm is generated. Even more so, the alarm is generated if the speed is increasingly greater than the threshold value, for example v1=120 Km/h; v2=120 Km/h; v3=121 Km/h; v4=122 Km/h; v5=122 Km/h; v6-123 Km/h.

If, instead, the speed vi detected in the positions pi inside the predetermined area 10 is greater than 15 km/h, but only for a number of times less than the threshold value m (two), or if it is never greater than 15 km/h, the system does not emit any alarm; for example if v1=14 Km/h; v2=12 Km/h; v3=14 Km/h; v4=16 Km/h; v5=14Km/h; v6=10 Km/h, the alarm is not generated.

Advantageously, the predetermined value V may be set so as to exclude activation of the alarm in the case where the detection has been caused by an animal which, probably, is not moving fast or at a speed higher than the newly set speed (15 Km/h in the example given).

Downstream of the first radar, along a road section indicated by 20 in Figure 1, and therefore in a position which is increasingly more dangerous, a second radar is installed, said radar being intended to detect the vehicle (or object/animal) travelling the wrong way in a second predetermined area 20. The second radar 2 is configured and operates substantially in the same way as the first radar.

If the vehicle still continues to travel in the wrong direction, the second radar emits an alarm which can be seen and/or heard by the drivers of vehicles travelling in the right direction.

Such an alarm is integrated in the second radar, as a flashing signal and/or pictorial symbol and/or siren.

Advantageously, the second radar 2 is connected via radio frequency to a display board system 30 which is situated before the exit U1 and is intended to warn drivers who have not yet entered the exit road U1 of the imminent danger.

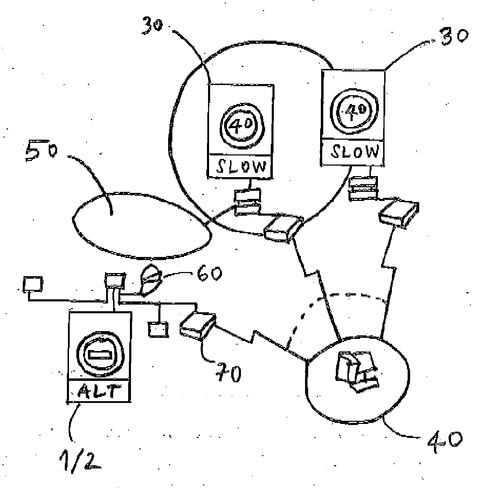

With reference to Figure 2, the electronic devices included in the system according to the present invention are diagrammatically shown.

1 and 2 indicate in diagrammatic form the radar 1 and the radar 2 which incorporate a luminous panel (alarm signal, stop signal] used to signal the wrong direction of travel to the driver travelling the wrong way (radar 1) or signal a vehicle travelling the wrong way to drivers who are travelling in the right direction (radar 2).

The reference number 30 indicates the remote panels which are installed remotely with respect to the radars 1 and 2 and are connected to them via radio. It is envisaged that connection of the radars 1 and 2 to the panels 30 is performed by means of a mesh network 50.

A TV camera 60 is preferably integrated in the radars 1 and 2 for capturing and recording the images in the predetermined areas 10 and 20 and a GPS/GPRS communications device is further integrated in the radars 1 and 2 for transmitting the alarms and the images recorded by the TV camera 60 to a central operating unit 40.

The central operating unit 40 and the remote panels 30 are in turn connected by means of the GPS/GPRS device, incorporated in the panels 30. The whole assembly may be controlled remotely by the central operating unit. The alarms emitted by the radars 1 and 2 and the respective luminous display boards may be reset, and the speed or threshold value settings of each radar may be modified remotely by the central control unit 40.

## Claims

1. System for detecting a vehicle travelling in the wrong direction, comprising a Doppler radar (1) adapted to detect a speed of displacement of the vehicle in a predetermined area of travel along a road, said system being adapted to emit an alarm when the speed value detected exceeds a predefined speed (V), **characterized by** the fact that said radar is adapted to perform a plurality (n) of speed detecting operations for detecting the speed of said vehicle in said area and the system emits said alarm when the speed values (Vi) detected during the plurality (n) of speed detection operations exceed the predefined speed (V) a predefined number of times (m), where m ≤n.

2. Detection system according to Claim 1, **characterized in that** said radar (1) is incorporated in a frame which incorporates the alarm, said alarm comprising a luminous signal suitable for being viewed by the driver of the vehicle travelling in the wrong direction.

3. Detection system according to Claim 1, **characterized in that** said alarm comprises an acoustic alarm and/or means for radio communication with a central control unit, said radio communication means comprising a GPRS/GPS module.

4. Detection system according to Claim 1, **characterized in that** it comprises a second Doppler radar (2) situated at a predefined distance from said Doppler radar (1) and adapted to detect a speed of displacement of the vehicle in a second predetermined area of travel along said road, situated after the first predetermined area in the wrong direction of travel, said second radar being adapted to perform a plurality (n) of speed detecting operations for detecting the speed of the vehicle in the second predetermined area and the system being adapted to emit a second alarm when the speed values (Vi) detected during the plurality (n) of speed detection operations exceed a predefined speed (V) a predefined number of times (m), where m ≤n, also in the second predetermined area.

5. Detection system according to Claim 4, **characterized in that** said second radar (2) is incorporated in a frame which incorporates the second alarm, said second alarm comprising a luminous signal suitable for being viewed by the drivers of vehicles travelling along the road in the correct direction.

6. Detection system according to Claim 4, **characterized in that** said second alarm comprises an acoustic alarm and/or means for radio communication with a central control unit, said radio communication means comprising a GPRS/GPS module.

7. Detection system according to Claims 1 or 4, **characterized in that** said predefined speed (V) and/or said predefined number of times (m) and/or said predetermined area and/or said second predetermined area may be modified.

8. Detection system according to Claims 2 or 3 or 5 or 6, **characterized in that** volume of an acoustic signal and/or a luminous intensity of a luminous signal may be modified by means of control means integrated in the detection system or connected remotely to the detection system.

9. Detection system according to Claim 4, **characterized in that** it comprises a roadway display-board system connected via radio to said second radar and adapted to receive from the second radar a signal for activation of luminous panels (30) or pictorial symbols intended to alert the drivers of vehicles travelling in the correct direction as to the presence of a vehicle travelling in the wrong direction.

10. Detection system according to Claim 4, **characterized in that** it comprises a central control unit (40) situated remotely and connected via GPS/GPRS to said first and second radar (1, 2) and to said roadway display-board system and adapted to modify operating parameters of the radars and the display board system.

## Patentansprüche

1. System zum Detektieren eines sich in die falsche Richtung bewegenden Fahrzeugs, mit einem Doppler-Radargerät (1), das angepasst ist, eine Geschwindigkeit der Bewegung des Fahrzeugs in einem vorbestimmten Bereich der Bewegung entlang einer Straße zu erfassen, wobei das System ausgelegt ist, einen Alarm auszugeben, wenn der erfasste Geschwindigkeitswert eine vorgegebene Geschwindigkeit (V) überschreitet, **dadurch gekennzeichnet, dass** das Radargerät angepasst ist, eine Vielzahl (n) von Vorgängen der Erfassung der Geschwindigkeit des Fahrzeugs in dem Bereich durchzuführen, und dass das System einen Alarm ausgibt, wenn die während der Vielzahl (n) der Vorgänge der Erfassung der Geschwindigkeit gemessenen Geschwindigkeitswerte (Vi) die vorgegebene Geschwindigkeit (V) eine vorgegebene Anzahl von Malen (m) überschreiten, wobei m kleiner gleich n ist.

2. System zum Detektieren nach Anspruch 1, **dadurch gekennzeichnet, dass** das Radargerät (1) in einem Rahmen eingebaut ist, der den Alarm beinhaltet, wobei das Alarmsignal ein Lichtsignal aufweist, das dazu geeignet ist, durch den Fahrer des sich in die falsche Richtung bewegenden Fahrzeugs erkannt zu werden.

3. System zum Detektieren nach Anspruch 1, **dadurch gekennzeichnet, dass** der Alarm einen akustischen Alarm und / oder ein Mittel zur Funkkommunikation mit einer zentralen Steuereinheit aufweist, wobei die zentrale Steuereinheit ein GRPS/GPS Modul umfasst.

4. System zum Detektieren nach Anspruch 1, **dadurch gekennzeichnet, dass** es ein zweites Doppler-Radargerät (2) aufweist, das in einem vorgegebenen Abstand entfernt von dem Doppler-Radargerät (1) angeordnet ist und ausgelegt ist, eine Geschwindigkeit der Bewegung des Fahrzeugs in einem zweiten vorbestimmten Bereich der Bewegung entlang der Straße zu erfassen, der sich in Richtung der falschen Fahrtrichtung hinter dem ersten vorbestimmten Bereich befindet, wobei das zweite Radargerät angepasst ist, eine Vielzahl (n) von Vorgängen der Erfassung der Geschwindigkeit des Fahrzeugs in dem zweiten vorbestimmten Bereich durchzuführen, und dass das System ausgelegt ist, einen zweiten Alarm auszugeben, wenn die während der Vielzahl (n) der Vorgänge der Erfassung der Geschwindigkeit gemessenen Geschwindigkeitswerte (Vi) die vorgegebene Geschwindigkeit (V) eine vorgegebene Anzahl von Malen (m) überschreiten, wobei m kleiner gleich n ist, auch in dem zweiten vorbestimmten Bereich.

5. System zum Detektieren nach Anspruch 4, **dadurch gekennzeichnet, dass** das zweite Radargerät (2) in einem Rahmen eingebaut ist, der den zweiten Alarm beinhaltet, wobei der zweite Alarm ein Lichtsignal aufweist, das dazu geeignet ist, durch Fahrer von sich auf der Straße in der richtigen Richtung bewegenden Fahrzeugen erkannt zu werden.

6. System zum Detektieren nach Anspruch 4, **dadurch gekennzeichnet, dass** der zweite Alarm einen akustischen Alarm und / oder Mittel zur Funkkommunikation mit einer zentralen Steuereinheit aufweist, wobei die zentrale Steuereinheit ein GRPS/GPS Modul umfasst.

7. System zum Detektieren nach den Ansprüchen 1 oder 4, **dadurch gekennzeichnet, dass** die vorgegebene Geschwindigkeit (V) und / oder die vorgegebene Anzahl von Malen (m) und / oder der vorbestimmte Bereich und / oder der zweite vorbestimmte Bereich geändert werden kann.

8. System zum Detektieren nach den Ansprüchen 2 oder 3 oder 5 oder 6, **dadurch gekennzeichnet, dass** die Lautstärke eines akustischen Signals und / oder eine Leuchtintensität eines Lichtsignals mit Hilfe von Steuermitteln modifiziert werden kann, die in dem System zum Detektieren integriert oder fern an das System zum Detektieren angeschlossen sind.

9. System zum Detektieren nach Anspruch 4, **dadurch gekennzeichnet, dass** es ein straßenseitiges Anzeigetafelsystem aufweist, das über Funk mit dem zweiten Radargerät verbunden ist und angepasst ist, von dem zweiten Radargerät ein Signal zur Aktivierung von Leuchtfeldern (30) oder Bildsymbolen zu empfangen, mit der Absicht, die Fahrer von sich in der richtigen Richtung bewegenden Fahrzeugen zu alarmieren, dass es ein Fahrzeug gibt, das in der falschen Richtung fährt.

10. System zum Detektieren nach Anspruch 4, **dadurch gekennzeichnet, dass** es eine zentrale Steuereinheit (40) aufweist, die im Abstand angeordnet ist und via GPS / GPRS mit dem ersten und dem zweiten Radargerät (1, 2) und dem straßenseitigen Anzeigetafelsystem verbunden und angepasst ist, Betriebsparameter der Radargeräte und des Anzeigetafelsystems zu modifizieren.

## Revendications

1. Système pour détecter un véhicule se déplaçant dans la mauvaise direction, comprenant un radar doppler (1) adapté pour détecter une vitesse de déplacement du véhicule dans une zone prédéterminée de déplacement sur une route, ledit système étant adapté pour émettre une alarme quand la valeur de vitesse détectée dépasse une vitesse prédéfinie (V), **caractérisé en ce que** ledit radar est adapté pour effectuer une pluralité (n) d'opérations de détection de vitesse pour détecter la vitesse dudit véhicule dans ladite zone et le système émet ladite alarme quand les valeurs de vitesse (Vi) détectées durant la pluralité (n) d'opérations de détection de vitesse dépassent la vitesse prédéfinie (V) un nombre prédéfini de fois (m), où m ≤ n.

2. Système de détection selon la revendication 1, **caractérisé en ce que** ledit radar (1) est incorporé dans un bâti qui incorpore l'alarme, ladite alarme comprenant un signal lumineux pouvant être vu par le conducteur du véhicule se déplaçant dans la mauvaise direction.

3. Système de détection selon la revendication 1, **caractérisé en ce que** ladite alarme comprend une alarme acoustique et/ou des moyens de radiocommunication avec une unité de commande centrale, lesdits moyens de radiocommunication comprenant un module GPRS/GPS.

4. Système de détection selon la revendication 1, **caractérisé en ce qu'**il comprend un deuxième radar doppler (2) situé à une distance prédéfinie dudit radar doppler (1) et adapté pour détecter une vitesse de déplacement du véhicule dans une deuxième zone prédéterminée de déplacement sur ladite route, située après la première zone prédéterminée dans la mauvaise direction de déplacement, ledit deuxième radar étant adapté pour effectuer une pluralité (n) d'opérations de détection de vitesse pour détecter la vitesse du véhicule dans la deuxième zone prédéterminée, et le système étant adapté pour émettre une deuxième alarme quand les valeurs de vitesse (Vi) détectées durant la pluralité (n) d'opérations de détection de vitesse dépassent une vitesse prédéfinie (V) un nombre prédéfini de fois (m), où m ≤ n, également dans la deuxième zone prédéterminée.

5. Système de détection selon la revendication 4, **caractérisé en ce que** ledit deuxième radar (2) est incorporé dans un bâti qui incorpore la deuxième alarme, ladite deuxième alarme comprenant un signal lumineux pouvant être vu par les conducteurs de véhicules se déplaçant sur la route dans la bonne direction.

6. Système de détection selon la revendication 4, **caractérisé en ce que** ladite deuxième alarme comprend une alarme acoustique et/ou des moyens de radiocommunication avec une unité de commande centrale, lesdits moyens de radiocommunication comprenant un module GPRS/GPS.

7. Système de détection selon la revendication 1 ou 4, **caractérisé en ce que** ladite vitesse prédéfinie (V) et/ou ledit nombre prédéfini de fois (m) et/ou ladite zone prédéterminée et/ou ladite deuxième zone prédéterminée peuvent être modifiés.

8. Système de détection selon la revendication 2 ou 3 ou 5 ou 6, **caractérisé en ce que** le volume d'un signal acoustique et/ou l'intensité lumineuse d'un signal lumineux peuvent être modifiés au moyen de moyens de commande intégrés dans le système de. détection ou connectés à distance au système de détection.

9. Système de détection selon la revendication 4, **caractérisé en ce qu'**il comprend un système de carte d'affichage de réseau routier connecté par radio audit deuxième radar et adapté pour recevoir du deuxième radar un signal d'activation de panneaux lumineux (30) ou de symboles picturaux destinés à alerter les conducteurs de véhicules se déplaçant dans la bonne direction de la présence d'un véhicule se déplaçant dans la mauvaise direction.

10. Système de détection selon la revendication 4, **caractérisé en ce qu'**il comprend une unité de commande centrale (40) située à distance et connectée par GPS/GPRS auxdits premier et deuxième radars (1, 2) et audit système de carte d'affichage de réseau routier et adapté pour modifier les paramètres opérationnels des radars et du système de carte d'affichage.
